# FASCICULE DE BREVET EUROPEEN

(11) **EP 3 363 282 B1**
(45) Date de publication et mention de la délivrance du brevet: **03.07.2019**
(21) Numéro de dépôt: 17156746.4
(22) Date de dépôt: 17.02.2017
(51) Int. Cl.: A01G 5/02, B65B 25/02

(54) **DISPOSITIF PERMETTANT DE REGLER L'OUVERTURE D'UNE POCHE OU DE FORMER UNE POCHE ET DE REGLER L'OUVERTURE DE LADITE POCHE**
VORRICHTUNG ZUR REGULIERUNG DER ÖFFNUNG EINER TASCHE ODER ZUR BILDUNG EINER TASCHE UND ZUR REGULIERUNG DER ÖFFNUNG DIESER TASCHE
DEVICE ENABLING TO ADJUST THE OPENING OF A POUCH OR ENABLING TO FORM A POUCH AND ADJUST THE OPENING THEREOF

(43) Date de publication de la demande: 22.08.2018
(73) Titulaire: SARL CYS FLEURS, 59380 Coudekerque-Village (FR)
(72) Inventeur: CYS, Pascal, 59380 Coudekerque-Village (FR)
(74) Mandataire: Schwalek, Valérie

(56) Documents cités:
- EP-A1- 2 033 510
- FR-A1- 2 852 578
- FR-A1- 2 884 683
- FR-A1- 2 913 961

## Description

### [Domaine technique]

La présente invention concerne un dispositif permettant de régler l'ouverture d'une poche ou de former une poche et de régler l'ouverture de ladite poche.

### [Art antérieur]

La mode des bouquets bulle®, c'est-à-dire des bouquets livrés dans une feuille plastique serrée autour des tiges et formant un vase perdure depuis plusieurs années.

La fabrication de tels bouquets est fastidieuse et requiert une main d'oeuvre qualifiée. Diverses machines ont été mises au point pour permettre aux fleuristes de réaliser rapidement et de manière certaine des bouquets tels que précités.

Ainsi, le document EP 2 033 510 décrit une machine qui comprend un cadre qui définit un orifice, lequel débouche dans une enceinte. Ce dispositif comporte des moyens de serrage qui sont constitués d'un collier de serrage formé d'au moins une partie flexible. Les moyens de commande comportent une poignée montée mobile en translation sur la paroi latérale de l'enceinte. Le déplacement de la poignée permet de resserrer plus ou moins le collier. Le fleuriste insère une feuille dans l'orifice à travers le collier ouvert. Il place ensuite les tiges du bouquet dans la poche formée par la feuille incurvée qui repose sur le fond de l'enceinte. Il remplit la poche ainsi formée d'eau et actionne la poignée en translation. Le collier se resserre. Il peut alors placer un lien autour de la feuille de manière à la maintenir contre la botte de tiges. Le bouquet bulle® est ainsi facilement fabriqué.

### [Problème technique]

Le dispositif décrit dans le document précité est portable mais lourd et encombrant.

Un but de la présente invention est de proposer un dispositif qui permet de remédier à tout ou partie des inconvénients du dispositif de l'art antérieur précité.

### [Brève description de l'invention]

La présente invention concerne un dispositif permettant de régler l'ouverture d'une poche ou de former une poche et de régler l'ouverture de ladite poche, ledit dispositif étant du type comportant un cadre définissant un orifice dans lequel on peut placer une portion de feuille ou la portion d'une poche définissant l'ouverture de cette dernière, des moyens de support dudit cadre qui sont adaptés pour maintenir ledit cadre au-dessus d'une surface, des moyens de serrage de ladite portion de feuille ou de ladite poche qui sont montés sur ledit cadre et des moyens de commande desdits moyens de serrage.

De manière caractéristique selon l'invention, lesdits moyens de serrage comportent une pluralité d'éléments comprenant chacun une première extrémité qui est montée sur ledit cadre et une extrémité libre, lesdits éléments sont montés mobiles entre une première position dite «éloignée» dans laquelle leurs extrémités libres forment un premier passage dans ledit orifice et une deuxième position dite «resserrée» dans laquelle lesdites extrémités libres forment dans ledit orifice un second passage de surface plus réduite que celle du premier passage et en ce que lesdits moyens de commande sont montés mobiles en rotation autour dudit orifice.

Les moyens de commande mobiles en rotation permettent de réduire l'encombrement du dispositif notamment lorsqu'ils sont disposés partiellement dans le cadre. La cadre peut être sensiblement annulaire ; l'orifice peut être circulaire ; avantageusement, le cadre est annulaire et définit un orifice circulaire.

### [Description détaillée]

Les moyens de serrage peuvent être aptes à être bloqués en position dans la première et dans la deuxième position uniquement.

Les moyens de serrage peuvent également être aptes à être bloqués dans toute position intermédiaire entre ladite première et ladite deuxième position ainsi que dans la première et la deuxième position.

La surface du premier passage n'est pas limitée selon l'invention. Le premier passage peut présenter une surface plus petite que celle de l'orifice ; avantageusement, dans la première position, lesdits éléments forment un premier passage dont la surface est au moins égale à la surface dudit orifice.

Selon un mode de réalisation particulier, au moins une partie desdits éléments comportent au niveau de leurs extrémités libres des moyens d'accroche d'un lien circulaire élastique. Ce mode de réalisation facilite la fermeture de la poche au moyen d'un lien élastique.

Le cadre n'est pas limité selon l'invention. Il peut, quels que soient les moyens de serrage, comporter une armature formant boîtier qui définit ledit orifice, un anneau monté mobile en rotation dans ladite armature et apte à être entraîné en rotation par lesdits moyens de commande, lesdites premières extrémités desdits éléments étant montées mobiles en rotation sur ledit anneau. Ce type de cadre permet de positionner les moyens de commande autour du cadre, réduisant l'encombrement du dispositif. Un tel cadre est de plus facile et peu couteux à fabriquer. Lorsque l'armature forme un boitier dont les deux parties haute et basse peuvent être assemblées puis démontées l'une de l'autre, le dispositif est ainsi facile à réparer et il permet, notamment le changement des éléments lorsque certains de ces derniers sont endommagés.

Les éléments peuvent être sensiblement longilignes et comporter une extrémité libre courbée, lesdites extrémités libres courbées coopérant pour définir ledit deuxième passage et lesdits éléments se chevauchent deux à deux au moins partiellement dans ladite première et ladite deuxième position. De tels éléments présentent l'avantage d'être légers et simples à fabriquer.

Selon un autre mode de réalisation, lesdits éléments comportent des plaques mobiles, disposées côte-à-côte, sans chevauchement de manière à obturer au moins partiellement ledit orifice. La forme des plaques n'est pas limitative de l'invention. Elles peuvent être triangulaires ou trapézoïdales, par exemple.

L'armature peut comporter une rainure, lesdites premières extrémités desdites plaques sont montées mobiles en translation dans ladite rainure et montées sur ledit anneau et la mise en rotation dudit anneau entraîne lesdites plaques en translation dans ladite rainure les faisant passer de ladite première position à ladite deuxième position et inversement. La rainure peut être hexagonale, par exemple.

Le dispositif peut comprendre des moyens de retrait automatique d'un lien circulaire élastique qui permet de retirer un lien circulaire élastique monté sur lesdits moyens d'accroche.

Les moyens d'accroche selon un mode particulier de réalisation comportent une pluralité de butées s'étendant à travers ledit orifice dans une direction sensiblement perpendiculaire au plan dudit orifice, lesdites butées sont disposées chacune sur ladite extrémité libre d'un desdits éléments. Dans ce cas, les moyens retrait automatique peuvent comporter au moins un éjecteur qui coopèrent avec lesdites butées et ledit lien élastique pour faire glisser ledit lien le long desdites butées vers les extrémités libres desdites butées.

L'éjecteur peut, par exemple, comporter une encoche en forme de U apte à coopérer avec une desdites butées et présentant une base effilée. L'encoche entoure partiellement la butée et vient se loger sous le line élastique de manière à le faire glisser le long de la butée pour le libérer.

L'anneau monté à rotation dans ladite armature peut également être monté mobile en translation selon une direction perpendiculaire au plan défini par ledit orifice. Il peut alors être amené dans une position haute distante des éjecteurs et une position basse dans laquelle l'extrémité des butées qui est solidaire des éléments coopère avec les éjecteurs. Un tel anneau permet un retrait particulièrement aisé du lien élastique.

Avantageusement, le dispositif comporte des moyens de blocage en position dudit anneau dans ladite armature. Ces moyens de blocage en position peuvent être des moyens de blocage en position bloquant la rotation de l'anneau et/ou des moyens de blocage en position selon l'épaisseur de l'armature c'est-à-dire selon une direction perpendiculaire au plan de l'orifice.

Ces moyens de blocage peuvent comprendre des butées verticales (c'est-à-dire perpendiculaires au plan de l'orifice) et/ou horizontales. Ces butées peuvent être des surface formant des fentes de guidage des éléments de commande, par exemple.

Selon l'invention, lesdits moyens de support peuvent comporter un moyen de fixation permettant la fixation à un support vertical tel qu'un mur, par exemple, et/ou un moyen formant pince adapté pour une fixation sur l'épaisseur d'un support plan, comme une table ou un plan de travail. Ils peuvent également comprendre un second cadre ou plaque qui est articulé au cadre précité formant l'orifice pour former une valisette. Lorsque les deux cadres sont rapprochés, la valisette est fermée et peu encombrante. Lorsque les deux cadres sont éloignés et bloqués en position, ils forment une colonne dont une extrémité est formée par le cadre formant l'orifice. Un tel dispositif est facile à disposer sur une table et facile à transporter.

Le dispositif peut également comporter une plaque de maintien disposée sous ledit orifice et montée réglable en distance par rapport audit orifice. Cette tablette peut être fixée en position et sert de support au fond de la poche.

### [Définitions]

Le terme « poche » regroupe au sens de la présente invention, une poche formée par pliage d'une feuille et un sac ou sachet qui comporte une ouverture pouvant être fermée avec un lien par rapprochement de la paroi définissant l'ouverture de ce sac.

### [Exemples]

La présente invention, qui est limitée par les revendications annexées, ses caractéristiques techniques et les différents avantages qu'elle procure apparaitront plus clairement à la lecture de la description qui suit de deux modes de réalisation présentés à titre d'exemples illustratifs et qui fait références aux dessins annexés sur lesquels :
- la Fig. 1 représente une vue en perspective d'un premier mode de réalisation ;
- la Fig. 2 représente une vue en perspective des moyens de serrage du premier mode de réalisation, ces moyens étant dans une position intermédiaire entre la position «éloignée» et la position «resserrée»,
- la Fig. 3 représente une vue du dessus des moyens de serrage du premier mode de réalisation, ces derniers étant dans la position «éloignée» ;
- la Fig. 4 représente une vue en perspective des moyens de serrage d'un deuxième mode de réalisation, ceux-ci étant dans une position intermédiaire entre la position « resserrée » et la position «éloignée », le boitier étant rendu transparent pour laisser voir les moyens de serrage ; et
- la Fig. 5 représente une vue en perspective des moyens de serrage représentés sur la Fig. 4, ces derniers étant dans la position « resserrée ».

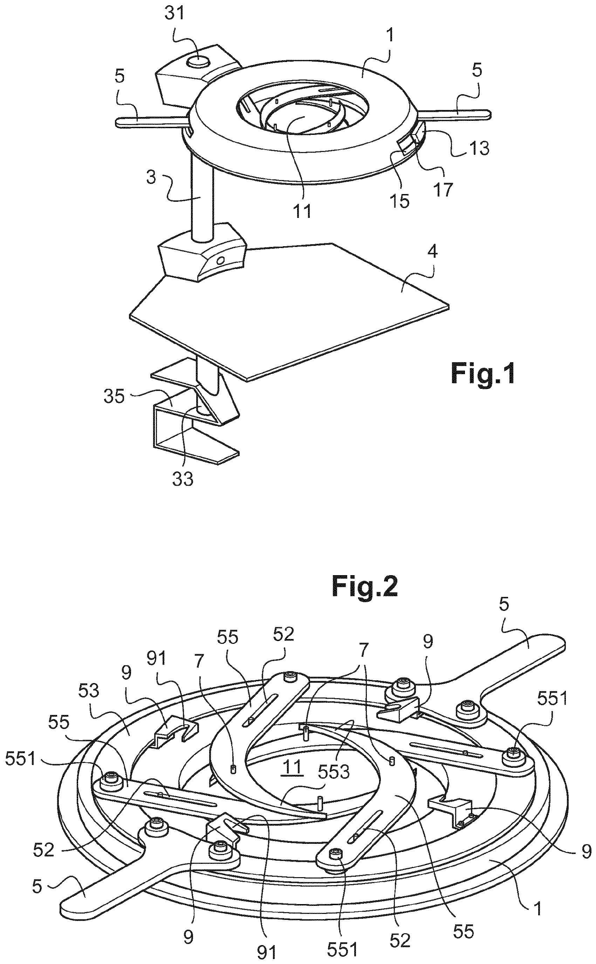

En référence à la Fig. 1, un premier mode de réalisation va maintenant être décrit. Dans ce mode de réalisation particulier, le dispositif comprend un cadre 1 qui définit un orifice 11. Ce cadre 1 est annulaire dans l'exemple représenté et de fait, l'orifice 11 est circulaire. Le cadre 1 est monté sensiblement à l'extrémité 31 d'une tige 3, verticale. La seconde extrémité 33 de la tige 3 est munie d'une pince 35 qui permet de fixer le dispositif sur l'épaisseur d'un plan de travail comme une table, par exemple. Les moyens de fixation de la pince 35 sur un plan horizontal ne sont pas représentés sur la Fig. 1. Une tablette ou plateau 4 est monté mobile en translation le long de la tige 3, entre la pince 35 et le cadre 1, sous l'orifice 11. Cette tablette 4 peut être fixée en position le long de la tige 3.

Le cadre 1 est équipé de moyens de commande qui sont dans le cas présent deux manettes 5 montées coulissantes chacune dans une fente 13 latérale du cadre 1. Chaque fente 13 présente à une de ses extrémités un décochement vertical 15 qui permet de baisser verticalement la manette 5 et de la maintenir ainsi en butée contre la paroi verticale 17 du décochement 15. Les manettes 5 sont mobiles en rotation par rapport au cadre 1 et à son orifice 11.

En référence à la Fig. 2, les moyens de serrage du premier mode de réalisation vont maintenant être décrits plus en détails. Le cadre 1 est formé de deux parties amovibles qui forment une armature ou boîtier. La partie supérieure a été retirée sur la Fig. 2 afin de montrer les moyens de serrage. Les manettes 5 sont fixées sur un anneau 53 qui est monté mobile en rotation dans le cadre 1 autour de l'axe vertical de l'orifice 11. L'anneau 53 est de plus, dans ce mode de réalisation particulier, monté mobile en translation selon la direction verticale de la Fig. 2. L'anneau 53 peut passer d'une position « haute » lorsque les manettes 5 coulissent dans la fente 13 à une position basse lorsque les manettes sont logées dans le décochement 15 de la fente 13. Les moyens de serrage comportent quatre doigts 55 équidistants qui comportent chacun une extrémité 551 fixée sur l'anneau 53 et mobile en rotation par rapport à ce dernier. Les doigts 55 présentent chacun une extrémité libre 553 incurvée vers le centre de l'orifice 11 et se terminant par une portion effilée. Les extrémité libres 553 des doigts comportent chacune une butée verticale 7 qui est orientée dans la direction de la première extrémité 31 de la tige 3. Ces butées 7 servent à fixer un élastique circulaire ; l'élastique est déformé pour entourer toutes les butées 7. Les extrémités libres 553 des doigts 55 se chevauchent deux à deux, la portion effilée d'un doigt 55 venant à proximité de la butée 7 du doigt adjacent, dans les positions proches de la position « resserrée ». Dans la position « resserrée », les portions effilées touchent les butées 7 de manière à faire glisser l'élastique verticalement, comme expliqué ultérieurement.

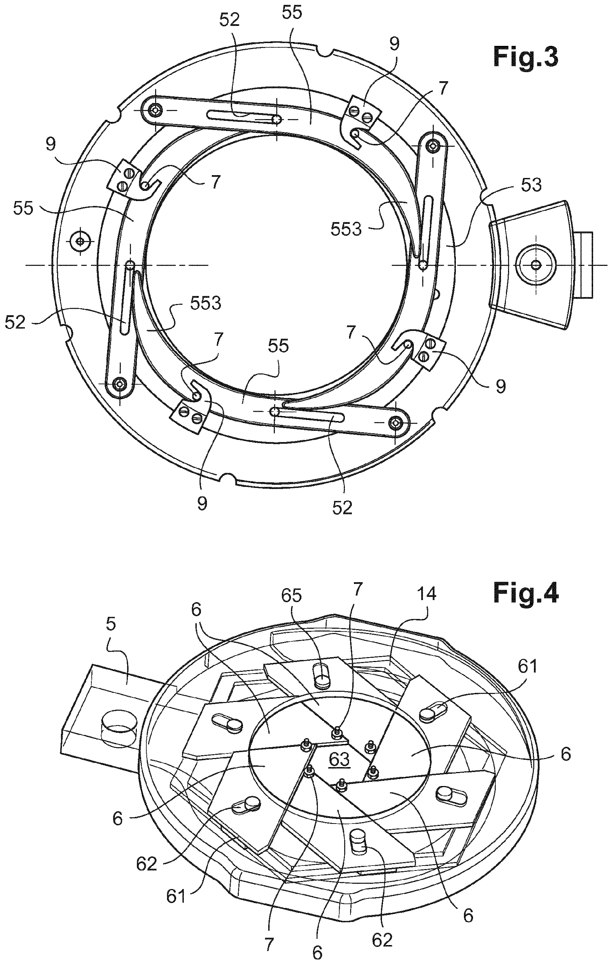

Comme représenté sur la Fig. 2, chaque doigt 55 comporte une rainure de guidage 52 qui coulisse le long d'un picot (non visible sur la Fig. 2 mais visible sur la Fig. 3) solidaire de la partie inférieure du cadre 1, laquelle est visible sur cette même figure.

Comme représenté sur la Fig. 2, le dispositif de l'invention comporte également des éjecteurs 9 qui sont des pièces fixées sur la partie inférieure de l'armature qui forme le cadre 1. Ces éjecteurs sont à proximité de l'orifice 11. Les éjecteurs 9 forment chacun une encoche en U 91, disposée au-dessus de l'anneau 53. Ces encoches 91 coopèrent avec les butées verticales 7 précitées comme expliqué ultérieurement en référence à la Fig. 3. Les encoches 91 comportent une surface en U biseautée vers le bas, la portion basse de l'encoche qui est la plus proche de l'anneau 53 est fine afin de se glisser facilement sous un lien élastique.

En référence à la Fig. 3, lorsque les doigts 55 sont dans la position «éloignée», ils forment un passage qui correspond sensiblement au passage 11 du cadre 1. Dans cette position, les butées 7 sont logées dans les encoches 91 des éjecteurs 9. Si un lien élastique est placé autour des butées 7, la partie basse des encoches 91 vient se glisser sous ce lien, le soulevant vers l'extrémité libre de la butée 7 sans toutefois le retirer totalement du système de butée 7. Les picots qui coulissent chacun dans une rainures 52 des doigts 55 sont en butée à l'extrémité de chacune des rainures de guidage 52. Les doigts 55 se chevauchent deux-à-deux, l'extrémité libre 553 d'un doigt 55 étant logée sous le doigts 55 consécutif.

Le fonctionnement de ce premier mode de réalisation va maintenant être décrit en référence aux Fig. 1 à 3.

L'utilisateur fixe le dispositif sur le bord d'une table à l'aide de la pince 35. Il tourne ensuite les manettes 5 afin de les mettre en position resserrée. Il entoure les butées 7 d'un lien élastique ; dans cette position, le lien élastique n'est pas nécessairement sous tension. L'utilisateur tourne ensuite les manettes 5 dans la fente 13 afin de former un passage plus grand dans l'orifice 11. Le lien élastique est ainsi déformé mais reste en position autour des butées 7. L'utilisateur prend ensuite une feuille de papier ou de plastique et l'introduit dans le passage formé de manière à créer une poche dont le fond est disposé sur la tablette 4. Des portions de feuille sortent alors hors du passage formé par les extrémités libres 553 des doigts 55 dans l'orifice 11. Ces portions de feuille dépassent verticalement, au-delà du cadre 1. L'utilisateur saisit alors un bouquet et insère les extrémités sans fleurs des tiges dans la poche formée par la feuille. Il tourne de nouveau les manettes 5 autour de l'orifice 11 pour amener les doigts 55 en position « resserrée ». La feuille est alors plaquée par les doigts 55 contre les tiges du bouquet. L'utilisateur fait ensuite passer les doigts 55 dans leur position « éloignée » à l'aide des manettes 5 et il place de plus les manettes 5 dans le décochement 15 de la fente 13. Les butées verticales 7 sur lesquelles est positionné le lien élastique viennent alors se loger dans les encoches en U 91. Le lien élastique est légèrement déplacé vers les extrémités libres des butées 7. Ce déplacement est renforcé par l'abaissement de l'anneau 53 dans le cadre 1, du fait du logement des manettes 5 dans le décochement 15. L'utilisateur refait alors passer les doigts 55 dans leur position « resserrée » ; durant ce déplacement, les pointes effilées des extrémités libres 553 des doigts 55 viennent progressivement se glisser sous le lien élastique et le retirent des butées verticales 7. Le lien élastique reprend sa forme du fait de son élasticité et vient fermer la feuille et la maintenir autour des tiges du bouquet. L'utilisateur n'a plus qu'à faire passer les doigts 55 dans leur position « éloignée » pour pouvoir faire sortir le bouquet bulle® ainsi formé à travers l'orifice 11 du cadre.

Selon une variante non représentée, l'anneau 53 n'est pas monté mobile en translation verticale dans l'armature. On obtient néanmoins le retrait du lien élastique du fait de la coopération des butées 7 avec les portions effilées des doigts 55 en position « resserrée ».

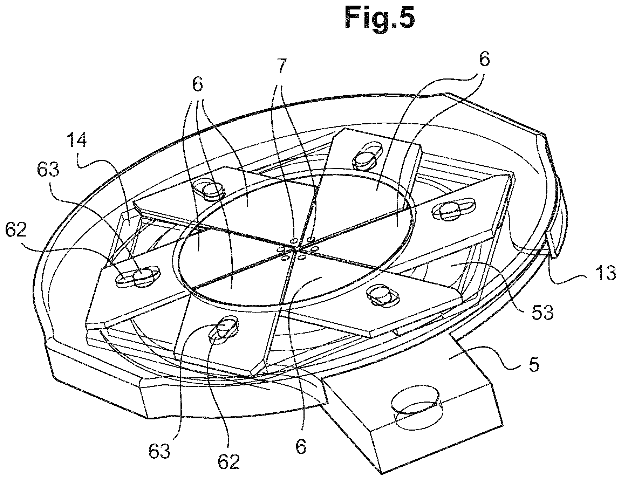

Un second mode de réalisation va maintenant être décrit en référence aux Fig. 4 et 5. Les éléments de ce second mode de réalisation en commun avec le premier sont référencés à l'identique. Les Fig. 4 et 5 représentent les moyens de serrage du deuxième mode de réalisation. Ce dernier comprend néanmoins les mêmes éléments que ceux décrits pour le premier mode de réalisation en référence à la Fig. 1.

Dans ce deuxième mode de réalisation, les doigts sont remplacés par des plaques 6 sensiblement trapézoïdales. Ces plaques comportent une première extrémité 61 montée coulissante dans une gorge hexagonale 14 ménagée dans la partie inférieure de l'armature qui forme le cadre 1. Ce mode de réalisation ne comporte qu'une manette 5. Les plaques 6 sont également montées sur l'anneau 53 au niveau de plots 65 qui coulissent dans des rainures de guidage 62. La Fig. 4 représente les plaques 6 dans une position intermédiaire. Dans cette position, les plaques 6 sont contiguës et forment une surface plane qui définit un passage 63. Des butées verticales 7 équipent les extrémités libres des plaques 6.

Comme représenté sur la Fig. 5, dans la position « resserrée », les plaques 6 obturent totalement l'orifice 11 du cadre 1. La manette 5 vient en butée contre le bord de la fente 13 dans laquelle elle coulisse. Les plots 65 sont presque en butée au fond des rainures de guidage 62.

Le fonctionnement de ce deuxième mode de réalisation va être expliqué en référence aux Fig. 4 et 5.

L'utilisateur place les plaques 6 dans leur position « resserrée » ou dans une position intermédiaire entre la position «éloignée» et la position « resserrée ». Il place un lien élastique circulaire autour des butées verticales 7. Il déplace ensuite la manette 5 en la faisant tourner autour de l'orifice 11, dans la fente 13 du cadre 1. Ce faisant les premières extrémités 61 des plaques 6 se déplacent en translation dans la gorge hexagonale 14 et simultanément en rotation par rapport au cadre 1. Les plaques 6 passent ainsi de leur position intermédiaire ou « resserrée » à leur position « éloignée ». Le lien élastique est alors sous tension autour des butées verticales 7. Dans leur position « éloignée », les plaques 6 forment un passage 63 qui correspond sensiblement au passage de l'orifice 11 du cadre 1. L'utilisateur forme alors une poche comme indiqué en référence au premier mode de réalisation. Il place les tiges du bouquet et remplit la poche d'eau. Il fait ensuite tourner la manette 5 pour amener à nouveau les plaques 6 dans leur position « resserrée ». Les plaques 6 viennent en butée contre les tiges du bouquet. L'utilisateur retire alors manuellement le lien élastique des butées verticales 7. Ce dernier reprend sa forme et vient enserrer les tiges, bloquant la feuille contre ces dernières et fermant ainsi la poche.

Selon une variante non représentée, le second mode de réalisation comprend également des moyens de retrait automatique d'un lien élastique.

Les deux modes de réalisation précités peuvent être utilisés également pour ferme un sac dont le fond est disposé sur la tablette 4 ou sur le plan horizontal auquel est fixée la pince 35. L'ouverture de sac est disposée à travers l'orifice 11 du cadre 1.

Par ailleurs, selon l'invention, il est également possible de fermer la poche ou le sac avec un lien filaire, non circulaire, qui est posé manuellement par l'utilisateur autour des tiges du bouquet ou autour de la portion de sac formant l'ouverture de ce dernier.

Selon des variantes non représentées des deux modes de réalisation précités, les moyens de support comportent un moyen de fixation à une paroi tel qu'un mur ou autre support vertical.

## Revendications

1. Dispositif permettant de régler l'ouverture d'une poche ou de former une poche et de régler l'ouverture de ladite poche, ledit dispositif étant du type comportant un cadre (1) définissant un orifice (11) dans lequel on peut placer une portion de feuille ou la portion d'une poche définissant l'ouverture de cette dernière, des moyens de support (3) dudit cadre (1) qui sont adaptés pour maintenir ledit cadre (1) au-dessus d'une surface, des moyens de serrage (55 ; 6) de ladite portion de feuille ou de ladite poche qui sont montés sur ledit cadre (1) et des moyens de commande (5) desdits moyens de serrage (55 ; 6), **caractérisé en ce que** lesdits moyens de serrage (55 ; 6) comportent une pluralité d'éléments (55 ; 6) comprenant chacun une première extrémité (551 ; 61) qui est montée sur ledit cadre (1) et une extrémité libre (553), **en ce que** lesdits éléments (55 ; 6) sont montés mobiles entre une première position dite «éloignée» dans laquelle leurs extrémités libres (553) forment un premier passage dans ledit orifice (11) et une deuxième position dite «resserrée» dans laquelle lesdites extrémités libres (553) forment dans ledit orifice (11) un second passage de surface plus réduite que celle du premier passage et **en ce que** lesdits moyens de commande (5) sont montés mobiles en rotation autour dudit orifice.

2. Dispositif selon la revendication 1, **caractérisé en ce que** lesdits moyens de serrage (55 ; 6) sont aptes à être bloqués dans toute position intermédiaire entre ladite première et ladite deuxième position

3. Dispositif selon la revendication 1 ou 2, **caractérisé en ce que** dans ladite première position, lesdits éléments (55 ; 6) forment un premier passage dont la surface est au moins égale à la surface dudit orifice (11).

4. Dispositif selon la revendication 1 ou 2, **caractérisé en ce qu'**au moins une partie desdits éléments (55 ; 6) comportent au niveau de leurs extrémités libres des moyens d'accroche d'un lien circulaire élastique.

5. Dispositif selon l'une quelconque des revendications précédentes, **caractérisé en ce que** ledit cadre (1) comporte une armature formant boîtier qui définit ledit orifice (11), un anneau (53) monté mobile en rotation dans ladite armature et apte à être entraîné en rotation par lesdits moyens de commande (5) et **en ce que** lesdites premières extrémités (551 61) desdits éléments (55 ; 6) sont montées mobiles en rotation sur ledit anneau (53).

6. Dispositif selon l'une quelconque des revendication précédentes, **caractérisé en ce que** lesdits éléments (55) sont longilignes et comportent une extrémité libre courbée (553), lesdites extrémités libres courbées coopérant pour définir ledit deuxième passage et **en ce que** lesdits éléments (55) se chevauchent deux à deux au moins partiellement dans ladite première et ladite deuxième position.

7. Dispositif selon l'une quelconque des revendications précédentes, **caractérisé en ce que** lesdits éléments comportent des plaques mobiles (6), disposées côte-à-côte, sans chevauchement de manière à obturer au moins partiellement ledit orifice (11).

8. Dispositif selon la revendication 7, **caractérisé en ce que** ladite armature comporte une rainure (14), **en ce que** lesdites premières extrémités (61) desdites plaques (6) sont montées mobiles en translation dans ladite rainure (14) et montées sur ledit anneau (53) et **en ce que** la mise en rotation dudit anneau (53) entraîne lesdites plaques (6) en translation dans ladite rainure (14), les faisant passer de ladite première position à ladite deuxième position et inversement.

9. Dispositif selon l'une quelconque des revendications 4 **caractérisé en ce qu'**il comprend des moyens de retrait automatique d'un lien circulaire élastique qui permet de retirer un lien élastique monté sur lesdits moyens d'accroche.

10. Dispositif selon la revendication 4, **caractérisé en ce que** lesdits moyens d'accroche comportent une pluralité de butées (7) s'étendant à travers ledit orifice (11) dans une direction sensiblement perpendiculaire au plan dudit orifice (11), **en ce que** lesdites butées (7) sont disposées chacune sur ladite extrémité libre d'un desdits éléments (55 ; 6) et **en ce que** lesdits moyens de retrait automatique comportent au moins un éjecteur (9) qui coopèrent avec lesdites butées (7) et ledit lien élastique pour faire glisser ledit lien le long desdites butées (7) vers les extrémités libres desdites butées (7).

11. Dispositif selon la revendication 10, **caractérisé en ce que** ledit éjecteur (9) comporte une encoche en forme de U (91), apte à coopérer avec une desdites butées (7) et présentant une base effilée.

12. Dispositif selon l'une quelconque des revendications 9 et 10, seulement quand elle dépend à son tour de la revendication 5, **caractérisé en ce que** ledit anneau (53) monté à rotation dans ladite armature est également monté mobile en translation selon une direction perpendiculaire au plan défini par ledit orifice (11).

13. Dispositif selon la revendication 12, **caractérisé en ce qu'**il comporte des moyens de blocage en position (13 ; 15 ; 17) dudit anneau (53) dans ladite armature.

14. Dispositif selon l'une quelconque des revendications précédentes, **caractérisé en ce que** lesdits moyens de support comportent un moyen de fixation permettant la fixation à un support vertical et/ou un moyen formant pince (35) adapté pour une fixation sur l'épaisseur d'un support plan.

15. Dispositif selon l'une quelconque des revendications précédentes, **caractérisé en ce qu'**il comporte une plaque de maintien (4), disposée sous ledit orifice (11) et montée réglable en distance par rapport audit orifice (11).

## Patentansprüche

1. Vorrichtung zur Regulierung der Öffnung einer Tasche oder zur Bildung einer Tasche und zur Regulierung der Öffnung dieser Tasche, wobei die Vorrichtung vom Typ ist, der einen Rahmen (1) einschließt, der eine Öffnung (11) definiert, in der ein Abschnitt eines Blatts oder der Abschnitt einer Tasche platziert werden kann, der die Öffnung dieser Letzteren definiert, Stützmittel (3) des Rahmens (1), die angepasst sind, um den Rahmen (1) über einer Oberfläche zu halten, Schnürmittel (55; 6) des Abschnitts des Blatts oder der Tasche, die auf dem Rahmen (1) angebracht sind, und Steuermittel (5) der Schnürmittel (55; 6), **dadurch gekennzeichnet, dass** die Schnürmittel (55; 6) eine Vielzahl von Elementen (55; 6) einschließen, die jeweils ein erstes Ende (551; 61), das auf dem Rahmen (1) angebracht ist, und ein freies Ende (553) umfassen, dadurch, dass die Elemente (55; 6) bewegbar zwischen einer ersten sogenannten "entfernten" Position, in der ihre freien Enden (553) einen ersten Durchgang in der Öffnung (11) bilden, und einer zweiten sogenannten "geschnürten" Position angebracht sind, in der die freien Enden (553) in der Öffnung (11) einen zweiten Durchgang mit einer Oberfläche bilden, die kleiner ist als jene des ersten Durchgangs, und dadurch, dass die Steuermittel (5) drehbewegbar um die Öffnung angebracht sind.

2. Vorrichtung nach Anspruch 1, **dadurch gekennzeichnet, dass** die Schnürmittel (55; 6) in jeder Zwischenposition zwischen der ersten und der zweiten Position blockiert werden können.

3. Vorrichtung nach Anspruch 1 oder 2, **dadurch gekennzeichnet, dass** in der ersten Position die Elemente (55; 6) einen ersten Durchgang bilden, dessen Oberfläche mindestens gleich der Oberfläche der Öffnung (11) ist.

4. Vorrichtung nach Anspruch 1 oder 2, **dadurch gekennzeichnet, dass** mindestens ein Teil der Elemente (55; 6) an ihren freien Enden Einhakmittel einer elastischen runden Verbindung einschließen.

5. Vorrichtung nach einem der vorstehenden Ansprüche, **dadurch gekennzeichnet, dass** der Rahmen (1) ein gehäusebildendes Gestell einschließt, das die Öffnung (11) definiert, einen Ring (53), der drehbewegbar im Gestell angebracht ist und durch die Steuermittel (5) in Drehung versetzt werden kann, und dadurch, dass die ersten Enden (551 61) der Elemente (55; 6) drehbewegbar auf dem Ring (53) angebracht sind.

6. Vorrichtung nach einem der vorstehenden Ansprüche, **dadurch gekennzeichnet, dass** die Elemente (55) langgestreckt sind und ein gekrümmtes freies Ende (553) einschließen, wobei die gekrümmten freien Enden zusammenarbeiten, um den zweiten Durchgang zu definieren, und dadurch, dass die Elemente (55) sich paarweise mindestens teilweise in der ersten und der zweiten Position überlappen.

7. Vorrichtung nach einem der vorstehenden Ansprüche, **dadurch gekennzeichnet, dass** die Elemente bewegbare Platten (6) einschließen, die Seite an Seite ohne Überlappung so angeordnet sind, um die Öffnung (11) mindestens teilweise zu verschließen.

8. Vorrichtung nach Anspruch 7, **dadurch gekennzeichnet, dass** das Gestell eine Nut (14) einschließt, dadurch, dass die ersten Enden (61) der Platten (6) in der Nut (14) parallelverschiebungsbewegbar angebracht sind und auf dem Ring (53) angebracht sind, und dadurch, dass das In-Drehung-Versetzen des Rings (53) ein Parallelverschieben der Platten (6) in der Nut (14) verursacht, wobei sie von der ersten Position in die zweiten Position gebracht werden und umgekehrt.

9. Vorrichtung nach einem der Ansprüche 4, **dadurch gekennzeichnet, dass** sie Mittel zum automatischen Rückzug einer runden elastischen Verbindung umfasst, der es ermöglicht, eine elastische Verbindung, die auf den Einhakmitteln angebracht ist, zurückzuziehen.

10. Vorrichtung nach Anspruch 4, **dadurch gekennzeichnet, dass** die Einhakmittel eine Vielzahl von Anschlägen (7) einschließen, die sich durch die Öffnung (11) in einer zur Ebene der Öffnung (11) im Wesentlichen senkrechten Richtung erstrecken, dadurch, dass die Anschläge (7) jeweils auf dem freien Ende eines der Elemente (55; 6) angeordnet sind, und dadurch, dass die Mittel zum automatischen Rückzug mindestens einen Auswerfer (9) einschließen, die mit den Anschlägen (7) und der elastischen Verbindung zusammenarbeiten, um die Verbindung entlang der Anschläge (7) zu den freien Enden der Anschläge (7) gleiten zu lassen.

11. Vorrichtung nach Anspruch 10, **dadurch gekennzeichnet, dass** der Auswerfer (9) eine U-förmige Raste (91) einschließt, die mit einem der Anschläge (7) zusammenarbeiten kann und eine spitze Basis aufweist.

12. Vorrichtung nach einem der Ansprüche 9 und 10, nur wenn er wiederum von Anspruch 5 abhängt, **dadurch gekennzeichnet, dass** der Ring (53), der im Gestell in Bewegung angebracht ist, ebenfalls parallelverschiebungsbewegbar gemäß einer Richtung senkrecht zur Ebene, die durch die Öffnung (11) definiert wird, angebracht ist.

13. Vorrichtung nach Anspruch 12, **dadurch gekennzeichnet, dass** sie Mittel zum Blockieren in Position (13; 15; 17) des Rings (53) im Gestell einschließt.

14. Vorrichtung nach einem der vorstehenden Ansprüche, **dadurch gekennzeichnet, dass** die Stützmittel ein Befestigungsmittel, das die Befestigung an einer vertikalen Stütze ermöglicht, und/oder ein klammerbildendes Mittel (35) einschließen, das für eine Befestigung auf der Dicke einer ebenen Stütze angepasst ist.

15. Vorrichtung nach einem der vorstehenden Ansprüche, **dadurch gekennzeichnet, dass** sie eine Halteplatte (4) einschließt, die unter der Öffnung (11) angeordnet ist und in Bezug auf den Abstand zur Öffnung (11) regelbar angebracht ist.

## Claims

1. Device enabling to adjust the opening of a pouch or to form a pouch and adjust the opening of said pouch, said device being of the type comprising a frame (1) defining an orifice (11) in which can be placed a sheet portion or the portion of a pouch defining the opening of the latter, means for supporting (3) said frame (1) which are adapted to maintain said frame (1) above a surface, clamping means (55; 6) of said sheet portion or of said pouch which are mounted on said frame (1) and controlling means (5) of said clamping means (55; 6), **characterised in that** said clamping means (55; 6) comprise a plurality of elements (55; 6) with each one comprising a first end (551; 61) which is mounted on said frame (1) and a free end (553), **in that** said elements (55; 6) are mounted mobile between a first so-called "separated" position in which the free ends (553) thereof form a first passage in said orifice (11) and a second so-called "clamped" position in which said free ends (553) form in said orifice (11) a second passage with a more reduced surface than that of the first passage and **in that** said controlling means (5) are mounted mobile in rotation around said orifice.

2. Device according to claim 1, **characterised in that** said clamping means (55; 6) are able to be blocked in any intermediate position between said first and said second position

3. Device according to claim 1 or 2, **characterised in that** in said first position, said elements (55; 6) form a first passage of which the surface is at least equal to the surface of said orifice (11).

4. Device according to claim 1 or 2, **characterised in that** at least one portion of said elements (55; 6) comprise on the free ends thereof means for attaching a circular elastic tie.

5. Device according to any preceding claim, **characterised in that** said frame (1) comprises an armature forming a case that defines said orifice (11), a ring (53) mounted mobile in rotation in said armature and able to be driven in rotation by said controlling means (5) and **in that** said first ends (551 61) of said elements (55; 6) are mounted mobile in rotation on said ring (53).

6. Device according to any of the preceding claims, **characterised in that** said elements (55) are slender and comprise a curved free end (553), said curved free ends cooperating in order to define said second passage and **in that** said elements (55) overlap two by two at least partially in said first and said second position.

7. Device according to any preceding claim, **characterised in that** said elements comprise mobile plates (6), arranged side by side, without overlapping in such a way as to close off at least partially said orifice (11).

8. Device according to claim 7, **characterised in that** said armature comprises a groove (14), **in that** said first ends (61) of said plates (6) are mounted mobile in translation in said groove (14) and mounted on said ring (53) and **in that** the setting into rotation of said ring (53) drives said plaques (6) in translation in said groove (14), passing them from said first position to said second position and inversely.

9. Device according to any of claims 4, **characterised in that** it comprises means for automatically removing a circular elastic tie that makes it possible to remove an elastic tie mounted on said means for attaching.

10. Device according to claim 4, **characterised in that** said means for attaching comprise a plurality of stops (7) extending through said orifice (11) in a direction substantially perpendicular to the plane of said orifice (11), **in that** said stops (7) are each arranged on said free end of one of said elements (55; 6) and **in that** said means for automatic removal comprise at least one ejector (9) that cooperate with said stops (7) and said elastic tie in order to slide said tie along said stops (7) to the free ends of said stops (7).

11. Device according to claim 10, **characterised in that** said ejector (9) comprises a U-shaped notch (91), able to cooperate with one of said stops (7) and having a tapered base.

12. Device according to any of claims 9 and 10, solely when it depends in turn on claim 5, **characterised in that** said ring (53) mounted in rotation in said armature is also mounted mobile in translation along a direction perpendicular to the plane defined by said orifice (11).

13. Device according to claim 12, **characterised in that** it comprises means for blocking in position (13; 15; 17) said ring (53) in said armature.

14. Device according to any preceding claim, **characterised in that** said support means comprising a means of fastening allow for the fastening to a vertical support and/or a means forming a clamp (35) suitable for a fastening over the thickness of a flat support.

15. Device according to any preceding claim, **characterised in that** it comprises a retaining plate (4), arranged under said orifice (11) and mounted adjustable in distance in relation to said orifice (11).
